(19) Europäisches Patentamt / European Patent Office / Office européen des brevets

(11) **EP 2 699 103 B1**

(12) **FASCICULE DE BREVET EUROPEEN**

(45) Date de publication et mention de la délivrance du brevet:
**02.06.2021 Bulletin 2021/22**

(21) Numéro de dépôt: **12724657.7**

(22) Date de dépôt: **20.04.2012**

(51) Int Cl.:
*A23L 7/10* *(2016.01)*    *A23L 7/117* *(2016.01)*
*A23L 7/196* *(2016.01)*    *A23K 10/30* *(2016.01)*

(86) Numéro de dépôt international:
**PCT/FR2012/000154**

(87) Numéro de publication internationale:
**WO 2012/143626 (26.10.2012 Gazette 2012/43)**

(54) **PROCÉDÉ DE PRÉPARATION D'UN GRAIN DE CÉRÉALE, INSTALLATION DE PRÉPARATION ET GRAIN DE CÉRÉALE CORRESPONDANTS**

**VERFAHREN ZUR HERSTELLUNG VON GETREIDEFLOCKEN UND ENTSPRECHENDES HERSTELLUNGSGERÄT SOWIE GETREIDEFLOCKEN**

**METHOD FOR PREPARING CEREAL GRAIN, AND CORRESPONDING PREPARATION EQUIPMENT AND CEREAL GRAIN**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.04.2011 FR 1153483**
**21.04.2011 IT VI20110103**

(43) Date de publication de la demande:
**26.02.2014 Bulletin 2014/09**

(73) Titulaire: **Panzani**
**69008 Lyon (FR)**

(72) Inventeurs:
• **MINIER, Chantal Lucie Paulette**
  **F-13400 Aubagne (FR)**
• **AREKION, Isabelle Françoise**
  **F-13004 Marseille (FR)**

(74) Mandataire: **Weber, Jean-François et al**
**Cabinet Didier Martin**
**Les Terrasses des Bruyères -Bâtiment C**
**314 C Allée des Noisetiers**
**69760 Limonest (FR)**

(56) Documents cités:
**EP-A1- 0 393 870      EP-A1- 0 672 353**
**WO-A1-00/44243       WO-A1-01/49132**
**WO-A1-01/62106       GB-A- 830 044**
**US-A- 2 064 701       US-A- 4 551 347**
**US-A- 4 603 055       US-A1- 2009 087 523**
**US-B1- 6 562 396**

EP 2 699 103 B1

## Description

La présente invention se rapporte au domaine technique général de la préparation industrielle de produits alimentaires au sein d'une chaine de fabrication, en particulier de la préparation de grains de céréales destinés à la consommation humaine et/ou animale, par exemple de grains de riz.

La présente invention se rapporte en particulier au domaine technique général des procédés de préparation d'un grain de céréale au sein d'une chaine de fabrication destinés par exemple à précuire ledit grain de céréale, notamment en provoquant la gélatinisation au moins partielle de l'amidon qu'il contient.

La présente invention concerne plus particulièrement un procédé de préparation d'un grain de céréale destiné à la consommation humaine et/ou animale comprenant successivement :

- une étape de trempage au cours de laquelle l'humidité du grain de céréale est augmentée jusqu'à au moins 20 %,

- une étape d'étuvage au cours de laquelle le grain de céréale est soumis à un traitement à la vapeur, afin de gélatiniser, au moins en partie, l'amidon contenu dans ledit grain de céréale,

- une étape de séchage du grain de céréale au cours de laquelle l'humidité dudit grain de céréale est réduite à moins de 30 %,

- une étape d'aplatissement du grain de céréale au cours de laquelle les dimensions dudit grain de céréale sont modifiées,

- une étape d'expansion du grain de céréale au cours de laquelle le volume dudit grain de céréale est augmenté.

La présente invention concerne en outre une installation pour la préparation d'un grain de céréale destiné à la consommation humaine et/ou animale comprenant successivement :

- une unité de trempage conçue pour augmenter l'humidité du grain de céréale jusqu'à au moins 20 %,

- une unité d'étuvage conçue pour gélatiniser, au moins en partie, l'amidon contenu dans ledit grain de céréale, ladite unité d'étuvage comprenant un module de traitement à la vapeur,

- une unité de séchage conçue pour réduire l'humidité dudit grain de céréale à moins de 30 %,

- une unité d'aplatissement conçue pour modifier les dimensions dudit grain de céréale,

- une unité d'expansion conçue pour augmenter le volume dudit grain de céréale.

La présente invention concerne enfin un grain de céréale expansé destiné à la consommation humaine et/ou animale et à être préparé à l'aide d'un procédé de préparation.

TECHNIQUE ANTERIEURE

Le riz est mondialement consommé et sert de base à l'alimentation humaine dans de nombreux pays, en particulier en Asie et en Afrique. En effet, le riz est une céréale très répandue, facilement disponible, bon marché, et qui présente de surcroît des qualités nutritionnelles intéressantes. En général, le riz est consommé après avoir subi différents traitements visant notamment à retirer certaines des enveloppes qui entourent le grain de riz au moment de sa récolte, ce grain de riz récolté étant classiquement appelé riz « *paddy* ». Une première enveloppe appelée « *balle* » est généralement enlevée, le plus souvent mécaniquement, car elle est impropre à la consommation. Au terme de cette opération, le grain de riz obtenu est susceptible d'être consommé et on le nomme classiquement riz complet ou riz « *cargo* ».

Les grains de riz cargo ou blanchis, c'est-à-dire dont le péricarpe a été retiré, sont classiquement cuits avant d'être ingérés par l'homme ou l'animal. Pour ce faire, il est connu d'appliquer au grain de riz un procédé de cuisson dans de l'eau bouillante, afin de provoquer la gélatinisation au moins partielle de l'amidon qu'il comprend. Un tel mode de cuisson, au cours duquel le grain de riz est généralement plongé dans de l'eau portée à ébullition, permet en plus d'hydrater le grain de riz de le rendre compatible avec sa consommation ultérieure.

Une telle cuisson du grain riz nécessite de porter l'eau à ébullition dans un contenant de type casserole puis de maintenir le grain de riz dans l'eau bouillante ou à haute température pendant un temps de cuisson d'au moins 10 minutes, afin que le grain de riz présente des qualités organoleptiques intéressantes pour le consommateur.

Ce procédé de cuisson, bien qu'il permette de rendre le riz plus facilement consommable et qu'il soit particulièrement simple à mettre en œuvre, n'en présente pas moins certains inconvénients.

En effet, ce procédé de cuisson est particulièrement long, puisqu'il implique d'une part le temps nécessaire pour porter l'eau à ébullition dans le contenant puis le temps de cuisson du grain riz dans cette eau bouillante. En général, il faut donc compter au moins 15 minutes pour réaliser une cuisson correcte du grain de riz dans des conditions classiques, par exemple pour la cuisson de grains de riz dans une casserole à l'aide d'une source de chaleur de type plaque électrique ou feu de gazinière.

La nécessité d'avoir recours à de l'eau bouillante et de maintenir l'ébullition pendant le temps de cuisson entraîne également une consommation énergétique non négligeable, notamment en termes de gaz ou d'électricité selon le moyen de cuisson utilisé.

De plus, ce procédé peut provoquer des risques de brûlures en raison de l'utilisation d'eau bouillante pour sa cuisson.

Le document US-6,562,396 décrit un procédé d'étuvage du riz paddy ou du riz cargo qui consiste à le tremper dans l'eau à une température inférieure à 70°C, puis à effectuer une gélatinisation du riz trempé en faisant passer le riz trempé en continu dans une enceinte.

WO00/44243 décrit un procédé et un appareil permettant de préparer en continu des céréales soufflées, en particulier des flocons de riz soufflés instantanés. On peut utiliser le riz soufflé comme une denrée alimentaire instantanée en ajoutant de l'eau bouillante. Ce document concerne un procédé qui consiste à tremper les céréales dans de l'eau, précuire ces céréales, les soumettre à un premier séchage, les transformer en flocons et, éventuellement, soumettre les flocons de céréales soufflés à un second séchage. Enfin, ce document concerne un appareil permettant de mettre en œuvre ce procédé. GB830044 décrit un procédé de préparation d'un produit céréalier en flocons ou en poudre qui s'épaissit avec l'addition de liquide, à partir de grains de céréales ou de parties de ceux-ci, caractérisé par la cuisson des céréales de 3 à 45 minutes avec de l'eau et de la vapeur sous une pression superatmosphérique de 0,3 à 4 ats jusqu'à ce qu'ils aient une teneur en humidité de 60 à 20 %, séchage et laminage, broyage du produit.

EXPOSE DE L'INVENTION

Les objets assignés à l'invention visent par conséquent à porter remède aux différents inconvénients énumérés précédemment et à proposer un nouveau procédé de préparation d'un grain de céréale dont les étapes sont pratiques à mettre en œuvre et permettent l'obtention d'un grain de céréale apte à être cuit de manière économe en énergie, rapide, sûre et optimale.

Un autre objet de l'invention vise à proposer un nouveau procédé de préparation d'un grain de céréale dont les étapes garantissent un traitement optimal du grain de céréale, en évitant notamment les risques de brisures et/ou de dégradation de ce dernier.

Un autre objet de l'invention vise à proposer un nouveau procédé de préparation d'un grain de céréale dont les étapes permettent d'obtenir un taux de gélatinisation optimal du grain de céréale.

Un autre objet de l'invention vise à proposer un nouveau procédé de préparation d'un grain de céréale permettant d'usiner de manière sûre et simple le grain de céréale, tout en garantissant sa résistance à des traitements d'aplatissement et d'expansion.

Un autre objet de l'invention vise à proposer un nouveau procédé de préparation d'un grain de céréale dans le domaine des grains de riz.

Un autre objet de l'invention vise à proposer une nouvelle installation de préparation d'un grain de céréale pratique à mettre en œuvre et qui permette l'obtention de grains de céréale aptes à être cuits de manière économe en énergie, rapide, sûre et optimale.

Un autre objet de l'invention vise à proposer une nouvelle installation de préparation d'un grain de céréale qui soit automatisée et dont les paramètres sont facilement contrôlables.

Un autre objet de l'invention vise à proposer une nouvelle installation de préparation d'un grain de céréale qui soit particulièrement adaptée pour le traitement des grains de riz.

Un autre objet de l'invention vise à proposer un nouveau grain de riz apte à être cuit de manière économe en énergie, rapide, sûre et optimale. Un autre objet de l'invention vise à proposer un nouveau grain de riz dont la capacité d'absorption d'eau est optimale.

Un autre objet de l'invention vise à proposer un nouveau grain de riz qui garantisse un équilibre nutritionnel au consommateur tout en satisfaisant les attentes organoleptiques de ce dernier.

Les objets assignés à l'invention sont atteints à l'aide d'un procédé selon la revendication 1.

Les objets assignés à l'invention sont également atteints à l'aide d'une installation selon la revendication 10.

Les objets assignés à l'invention sont enfin atteints à l'aide d'un grain de céréale expansé selon la revendication 14.

MEILLEURE MANIERE DE REALISER L'INVENTION

La présente invention concerne un procédé de préparation d'un grain de céréale destiné à la consommation humaine et/ou animale, c'est-à-dire un procédé qui consiste à modifier les caractéristiques du grain de céréale. Le procédé de préparation de l'invention concerne par exemple un procédé de pré-cuisson ou de gélatinisation dudit grain de céréale, en vue de faciliter son ingestion ultérieure et/ou en vue d'améliorer ses propriétés, notamment organoleptiques. Le procédé de l'invention est préférentiellement un procédé de pré-cuisson du grain de céréale visant à accélérer sa cuisson ultérieure et à rendre son utilisation plus pratique.

De manière avantageuse, le procédé de l'invention est un procédé facilement industrialisable qui peut être mis en œuvre à grande échelle. Il est cependant envisageable que certaines étapes du procédé de l'invention soient réalisées de manière artisanale ou manuelle.

Le grain de céréale mis en oeuvre dans le procédé de l'invention est comestible pour l'homme et/ou l'animal, et contribue à l'apport alimentaire de ce dernier. Il s'agit par exemple d'un grain de riz. Le riz étant la première céréale consommée dans le monde, il présente l'intérêt d'être une céréale peu onéreuse, accessible, produite et consommée en grande quantité. De préférence, le grain de riz est de type indica, en raison notamment de ses caractéristiques de fermeté, de texture et d'élasticité adaptées pour le procédé de l'invention. Il est cependant envisageable, sans sortir du cadre de la présente invention, d'utiliser un autre type de riz, par exemple du riz de type japonica ou javanica.

En outre, le procédé de préparation de l'invention est préférentiellement réalisé à partir de grains riz cargo, c'est-à-dire de grains de riz dont la balle non comestible a été enlevée. Il est toutefois possible d'utiliser également d'autres types de grains de riz ayant fait l'objet de traitements plus ou moins nombreux pour enlever les différentes enveloppes qui entourent le grain de riz.

Alternativement, Il est envisageable d'utiliser un grain issu d'une céréale autre que le riz, par exemple issu du maïs, du millet ou de tout autre céréale susceptible de subir un procédé de préparation conforme à la présente invention. Il est également possible de mélanger plusieurs grains de céréale issus de céréales différentes en vue de leur préparation, notamment de leur pré-cuisson, grâce au procédé de l'invention.

Dans un mode de réalisation particulièrement préféré, le procédé de l'invention est conçu pour la pré-cuisson d'un grain de riz. Par souci de concision et de clarté, nous nous attacherons à décrire dans la suite de la description préférentiellement un tel procédé de pré-cuisson d'un grain de riz.

Le procédé de préparation comprend successivement plusieurs étapes, afin d'obtenir un grain de céréale, notamment de riz, préparé, de préférence précuit, qui présente l'intérêt d'être plus facilement et plus rapidement cuit ensuite.

Ce procédé comprend tout d'abord une étape de trempage au cours de laquelle l'humidité du grain de céréale est augmentée jusqu'à au moins 20 %, de préférence jusqu'à une valeur égale à sensiblement 30 %. Cette étape comprend donc avantageusement une augmentation de l'humidité du grain de riz, de manière à faciliter ensuite son traitement au cours des étapes ultérieures du procédé.

Cette étape de trempage est réalisée jusqu'à atteindre préférentiellement un taux d'humidité de l'ordre de 30 % à cœur du grain de riz. Ce taux d'humidité est particulièrement adapté pour permettre la gélatinisation de l'amidon et le traitement complet du grain, dans des conditions variables et parfois difficiles de température, de pression, d'aplatissement et d'expansion, sans risque de fêlures et/ou de brisures.

De manière avantageuse, l'étape de trempage comprend une opération d'immersion dudit grain de céréale dans une eau présentant une température supérieure à sensiblement 20°C, de manière avantageuse au moins égale à sensiblement 50°C, et de préférence comprise entre sensiblement 55 et 70°C. Ainsi, le grain de riz est préférentiellement plongé dans un bain d'eau chaude, portée à une température au moins égale à 60°C. Il est également tout à fait envisageable que l'eau du bain de trempage comprenne des composés susceptibles d'améliorer les propriétés nutritionnelles et/ou organoleptiques des grains de riz, par exemple des arômes, des vitamines ou des additifs, cette liste n'étant pas exhaustive, ces composés pouvant pénétrer dans le grain de riz par absorption.

Le temps de trempage du grain de céréale varie en fonction de nombreux paramètres, notamment en fonction de la nature du grain de céréale et de la température de l'eau. Il est par exemple de l'ordre de trois heures si la température de l'eau est de 65°C pour l'immersion de ce même grain de riz.

L'étape de trempage peut alternativement être réalisée à une température de l'eau inférieure, par exemple à la température ambiante voire à une température plus faible, une telle température plus faible nécessitant alors un temps de trempage bien plus long.

Le procédé comprend ensuite, postérieurement à l'étape de trempage, une étape d'étuvage au cours de laquelle le grain de céréale est soumis à un traitement à la vapeur, afin de gélatiniser, au moins en partie, l'amidon contenu dans ledit grain de céréale.

L'étape d'étuvage se fait préférentiellement à une température supérieure à sensiblement 100°C, de préférence égale à sensiblement 120°C, pendant une durée supérieure à sensiblement 5 mn, de préférence comprise entre sensiblement 7 et 50 mn, de manière particulièrement préférée comprise entre sensiblement 10 et 30 mn, de manière à permettre la gélatinisation d'au moins 80 % de l'amidon compris dans ledit grain de céréale.

En outre, l'étape d'étuvage comprend une opération d'apport de pression, de l'ordre de 1 bar, sur ledit grain de céréale et conduit à la gélatinisation d'au moins 90 % de l'amidon contenu dans ledit grain de céréale, de préférence à la gélatinisation complète de ce dernier. L'étape d'étuvage se fait plus particulièrement sous pression vapeur, selon un mode continu, à une pression comprise entre sensiblement 0,5 et 2 bars, de manière avantageuse égale à sensiblement 0,75 bar.

Ainsi, dans un mode de réalisation préféré, l'étape d'étuvage se fait à hautes température et pression, pendant un temps assez court, afin d'obtenir les qualités requises, notamment en termes d'élasticité et de plasticité, du grain de céréales pour garantir sa résistance aux étapes ultérieures du procédé de l'invention. On applique par exemple pendant 6 mn une pression de l'ordre de 0,75 bar et une température de l'ordre de 120°C pour étuver ledit grain de riz.

Le procédé comprend également, postérieurement à l'étape d'étuvage, une étape de séchage du grain de céréale au cours de laquelle l'humidité dudit grain de céréale est réduite à moins de 30 %.

De manière préférée, l'étape de séchage comprend une opération de passage dudit grain de céréale dans un flux d'air chaud dont la température est au moins égale à 50°C, de manière à ce que l'humidité dudit grain de céréale diminue et soit inférieure à sensiblement 30 %, de préférence égale à sensiblement 24 %. Ce taux d'humidité de 24 % garantit, de manière surprenante et inattendue, des propriétés intéressantes et optimales au grain de céréale pour les étapes ultérieures du procédé.

De manière préférée, le procédé de préparation de l'invention comprend, postérieurement à l'étape de séchage, une étape d'usinage, au cours de laquelle au moins une enveloppe externe du grain de céréale est enlevée, alors que ledit grain de céréale présente une humidité égale à sensiblement 24 %. De préférence, l'usinage comprend une opération de retrait du péricarpe et/ou d'autres enveloppes externes d'un grain de riz cargo, de manière à obtenir un grain de riz blanc. L'étape d'usinage est donc mise en œuvre postérieurement à l'étape de séchage et précède l'étape de réchauffage. L'étape d'usinage permet avantageusement d'enlever au moins 5 % en poids de son, de préférence sensiblement 8 % en poids de son. Il est cependant parfaitement envisageable que le procédé de l'invention ne comprenne pas d'étape d'usinage du grain de céréale.

Le procédé comprend également, de préférence après l'étape de séchage et celle d'usinage, une étape d'aplatissement du grain de céréale au cours de laquelle les dimensions dudit grain de céréale sont modifiées, De préférence, l'étape d'aplatissement comprend une opération de réduction de l'épaisseur du grain de riz et donc à provoquer un élargissement de sa largeur et/ou longueur.

Cette étape d'aplatissement comprend avantageusement une opération de passage dudit grain de céréale entre au moins deux rouleaux afin qu'il présente une épaisseur comprise entre sensiblement 0,1 et 1 mm, de préférence entre sensiblement 0,4 et 0,8 mm, de manière particulièrement avantageuse égale à sensiblement 0,6 mm.

L'étape d'aplatissement s'avère, de manière surprenante et inattendue, importante pour garantir des propriétés optimales du grain de riz, notamment en termes de plasticité et d'élasticité, avant son expansion.

De préférence, le procédé de préparation de l'invention comprend, postérieurement à l'étape d'aplatissement et préalablement à l'étape d'expansion, une deuxième étape de séchage à l'air chaud, au cours de laquelle l'humidité du grain de céréale est réduite à une valeur inférieure à sensiblement 25 %, de préférence à une valeur égale à sensiblement 18 %.

Le procédé comprend également, préalablement à l'étape d'aplatissement et donc postérieurement à l'étape d'usinage, une étape de réchauffage du grain de céréale au cours de laquelle la température dudit grain de céréale est augmentée, de manière à modifier des propriétés plastiques dudlt grain de céréale afin de faciliter un aplatissement de ce dernier au cours de l'étape d'aplatissement. Cette étape permet avantageusement un rééquilibrage de l'humidité du grain, c'est-à-dire un ajustement de son taux d'humidité, afin notamment d'améliorer la résistance dudit grain aux étapes ultérieures du procédé. Selon l'invention, l'étape de réchauffage comprend une opération de rééquilibrage du taux d'humidité du grain de céréale compris entre 20 % et 30 %, de préférence égal à sensiblement 25 %.

En d'autres termes, l'étape de réchauffage permet par l'apport de chaleur, plus particulièrement de chaleur humide, au grain de céréale, ici avantageusement de riz, de transformer les caractéristiques du grain de riz, de manière à améliorer la plasticité de ce dernier, afin qu'il subisse sans dommage, notamment en termes de brisures ou d'éclatement, les étapes suivantes du procédé, en particulier l'aplatissement et l'expansion.

De manière avantageuse, l'étape de réchauffage dudit grain de céréale comprend une opération d'apport de vapeur audit grain de céréale, de telle sorte que la température dudit grain de céréale atteigne au moins 40°C, de préférence sensiblement 50°C.

L'apport de chaleur humide au cours de l'étape de réchauffage dudit grain de céréale permet avantageusement de rééquilibrer le taux d'humidité du grain de céréale, c'est-à-dire d'obtenir un taux d'humidité idéal dudit grain de céréale. De préférence, cette étape de réchauffage comprend une opération de rééquilibrage du taux d'humidité, de telle sorte que ce dernier soit sensiblement identique en tous points dudit grain de céréale, c'est-à-dire sensiblement égal à la surface et au centre dudit grain de céréale, et qu'il soit optimal pour les étapes ultérieures du procédé. Un tel taux d'humidité, compris entre sensiblement 20 % et 30 %, de préférence égal à sensiblement 25 %, favorise en particulier l'étape ultérieure d'aplatissement dudit grain.

L'étape de réchauffage apparaît donc, de manière non prévisible, comme une étape essentielle de ce procédé de préparation qui garantit des capacités de déformation et de résistance à la cassure ultérieures dudit grain de céréale, notamment au cours de son aplatissement et de son expansion.

Ce procédé comprend par ailleurs, postérieurement à l'étape d'aplatissement, une étape d'expansion du grain de céréale au cours de laquelle le volume dudit grain de céréale est augmenté. L'étape d'expansion conduit également à une augmentation de la porosité dudit grain de céréale.

Dans un mode de réalisation préféré, l'étape d'expansion comprend une opération de passage dudit grain de céréale dans un flux d'air chaud présentant une température comprise entre sensiblement 200 et 350°C, par exemple entre 250 et 320°C, de préférence entre sensiblement 220 et 270°C, pendant un temps compris entre sensiblement 10 s et 2 mn, de manière préférée égal à sensiblement 1 mn, afin que le volume dudit grain de céréale augmente d'un facteur au moins égal à 3.

L'étape d'expansion du grain de riz est avantageusement réalisée par passage du grain de riz dans un flux d'air chaud présentant une température comprise entre sensiblement 280 et 320°C pendant environ 1 mn. L'étape d'expansion permet d'obtenir un grain de riz avec une faible densité, de l'ordre de 0,4 g/cm$^3$, qui présente l'intérêt de cuire beaucoup plus rapidement qu'un grain de riz classique. En effet, le grain de riz expansé obtenu au terme de l'étape d'expansion présente une porosité bien supérieure et une densité bien plus faible en comparaison à celles des grains de riz blancs classiques.

Le procédé de la présente invention comprend avantageusement, postérieurement à l'étape d'expansion, une étape de séchage final au cours de laquelle le grain de céréale est séché à l'air et son humidité est réduite à moins de 15%, de préférence à sensiblement 12 %, de manière préférée à sensiblement 8 % ou 9 %.

Le taux d'humidité du grain de riz obtenu par l'étape de séchage final dépend de l'utilisation ultérieure dudit grain de riz, notamment s'il est destiné à entrer en contact avec d'autres matériaux secs susceptibles de reprendre de l'humidité, par exemples des ingrédients aromatiques. Dans ce dernier cas, l'humidité du grain de riz est préférentiellement de l'ordre de 8 %.

De manière préférée, il comprend postérieurement à l'étape de séchage final, une étape d'enrobage dudit grain de céréale avec au moins composé conçu pour améliorer les propriétés organoleptiques et/ou nutritionnelles dudit grain de céréale.

De préférence, l'étape d'enrobage comprend une première opération de mélange des grains de céréale, en particulier des grains de riz, avec une matière grasse, par exemple avec une huile végétale de type huile de tournesol ou huile d'olive. Cette étape d'enrobage comprend ensuite une deuxième opération de mélange des grains de riz avec des composés aromatiques, par exemple des épices et des plantes aromatiques, et certains additifs. On ajoute notamment des antioxydants au mélange, par exemple un extrait de romarin, afin d'éviter un quelconque rancissement de la matière grasse.

Les deux étapes de mélange peuvent être regroupées en une seule opération de mise en contact d'un ou plusieurs composés ou substances nutritionnelles et/ou aromatiques, formant une solution aromatique et/ou nutritionnelle, avec le grain de riz, puis de mélange par exemple en rotation à l'aide de pâles rotatives dans un cylindre.

De préférence, les étapes de mélange ont une durée comprise entre sensiblement 5 et 10 mn, la solution aromatique et/ou nutritionnelle représentant entre 1 et 2,5 % en poids de la quantité de grain de riz à enrober.

L'étape d'enrobage permet ainsi d'obtenir un grain de riz présentant des qualités nutritionnelles et/ou organoleptiques différentes et améliorées par rapport à un grain de riz blanc classique, en particulier grâce aux substances aromatiques enrobées autour dudit grain de riz. Il peut ainsi présenter par exemple un goût de tomate ou d'épices.

Le procédé de préparation permet ainsi de préparer un grain de céréale, notamment de le précuire, afin d'améliorer sa cuisson ultérieure. En effet, ce procédé, grâce à ses différentes étapes contrôlées et paramétrées, garantit l'obtention d'un riz présentant une vitesse de réhydratation particulièrement faible dans l'eau, de l'ordre de quelques minutes, par exemple 4 mn, à l'aide d'une eau non nécessairement chauffée.

La présente invention concerne également une installation pour la préparation d'un grain de céréale destiné à la consommation humaine et/ou animale. De manière préférée, cette installation permet de mettre en œuvre le procédé de préparation du grain de céréale susvisé, afin d'obtenir un grain de céréale préparé tel que précité.

En particulier, l'installation de l'invention est conçue pour la pré-cuisson d'un grain de riz, afin de garantir une cuisson ultérieure rapide de ce dernier, grâce notamment à la modification des propriétés du grain de riz, par exemple en termes de densité et de porosité.

La présente installation est avantageusement une machine complète de transformation d'un grain de céréale, ici préférentiellement d'un grain de riz, qui comprend plusieurs unités disposées les unes par rapport aux autres en se suivant, afin de permettre la préparation optimale et efficace dudit grain de riz. Cette installation comprend successivement :

- une unité de trempage conçue pour augmenter l'humidité du grain de céréale jusqu'à au moins 20 %,

- une unité d'étuvage conçue pour gélatiniser, au moins en partie, l'amidon contenu dans ledit grain de céréale, ladite unité d'étuvage comprenant un module de traitement à la vapeur,

- une unité de séchage conçue pour réduire l'humidité dudit grain de céréale à moins de 30 %,

- une unité d'aplatissement conçue pour modifier les dimensions dudit grain de céréale,

- une unité d'expansion conçue pour augmenter le volume dudit grain de céréale.

Elle comprend également une unité de réchauffage du grain de céréale disposée avant l'unité d'aplatissement et conçue pour augmenter la température dudit grain de céréale par apport de chaleur humide, de manière à modifier des propriétés plastiques dudit grain de céréale afin de faciliter un aplatissement de ce dernier dans l'unité d'aplatissement

Cette unité de réchauffage est disposée avant l'unité d'aplatissement, en considération du sens d'avancement des grains, et après une unité d'usinage qui suit l'unité de séchage. Ainsi, l'installation selon l'invention comporte une unité de réchauffage qui est disposée entre l'unité d'usinage et l'unité d'aplatissement.

De manière avantageuse, l'unité de trempage comprend un bain de trempage classique tandis que l'unité d'étuvage comprend un cuiseur sous pression. L'unité d'étuvage comprend préférentiellement un culseur sous pression.

L'unité de séchage comprend préférentiellement un séchoir conçu pour sécher les céréales ou les pâtes alimentaires.

Dans un mode de réalisation préféré, l'unité d'aplatissement comprend au moins deux rouleaux destinés à aplatir ledit grain de céréale lors d'un déplacement relatif desdits rouleaux. Les rouleaux sont sensiblement identiques à ceux utilisés pour le floconnage pour réduire les grains de céréales en lamelles.

L'installation comprend également une unité d'usinage destinée à retirer les enveloppes entourant ledit grain de céréale, lorsque ce dernier présente une humidité égale à sensiblement 24 %. Ladite unité d'usinage est disposée en aval de l'unité de séchage et en amont de l'unité de réchauffage et comprend par exemple des blanchisseurs adaptés pour usiner des grains de riz particulièrement humides. Elle comprend par exemple des pierres abrasives sur lesquelles est enlevée une partie du son contenu dans ledit grain de céréale.

De préférence, l'unité d'expansion comprend un expandeur classiquement rencontré dans le domaine de l'expansion des céréales, ledit expandeur permettant notamment l'augmentation du volume et de la porosité desdits grains de céréales.

En aval de l'unité d'expansion, la présente installation comprend de manière préférée, une unité de séchage finale conçue pour réduire l'humidité du grain de riz à moins de 12 %, de préférence à environ 8 %. Cette unité de séchage final comprend par exemple un séchoir tapis classique.

Enfin, l'installation comprend également une unité d'enrobage conçue pour réaliser l'étape d'enrobage susvisée et comprenant un mélangeur destiné à mélanger tous les ingrédients et composés. De préférence, l'unité d'enrobage comprend un cylindre dans lequel sont introduits les ingrédients ou substances à enrober formant une solution aromatique et/ou nutritionnelle, Le cylindre comprend un arbre rotatif à pales conçu pour avantageusement mettre en contact et mélanger la solution aromatique et/ou nutritionnelle avec les grains de riz, de manière à permettre l'enrobage de ces derniers.

Les différentes unités de l'installation sont reliées entre elles par des convoyeurs, de type tapis d'acheminement, sur lesquels circulent les grains de céréale à préparer.

Dans un mode de réalisation particulièrement avantageux, les différentes unités de l'installation sont positionnées les unes par rapport aux autres, de manière à optimiser l'espace et à réduire les flux de grains de céréales et les pertes énergétiques.

Cette installation présente l'intérêt de permettre un traitement optimal, rapide et pratique des grains de céréales, préférentiellement des grains de riz, de manière à obtenir un grain de riz préparé, précuit et apte à être cuit en quelques minutes dans de l'eau. Ce temps de cuisson particulièrement faible et l'absence d'eau bouillante contribuent à réduire significativement l'énergie nécessaire pour la cuisson du grain de céréale de l'invention en comparaison avec un grain de riz classique non préparé.

La présente invention concerne enfin un grain de céréale expansé destiné à la consommation humaine et/ou animale et à être préparé à l'aide d'un procédé de préparation susceptible d'être conforme à celui susvisé. De préférence, ce grain de céréale comprend un grain de riz, en particulier de type indica ou japanica. Il s'agit préférentiellement d'un grain de riz long blanc classiquement utilisé dans l'alimentation humaine de nombreux pays.

Le grain de riz de l'invention est expansé c'est-à-dire qu'il est moins dense, plus poreux et plus volumineux qu'un grain de riz classique. Il est également préparé selon le procédé de pré-cuisson susvisé, c'est-à-dire qu'il a subi, de préférence dans l'installation détaillée ci-avant, le procédé de l'invention. Il présente ainsi des propriétés intrinsèques, notamment une porosité élevée et une densité faible, qui lui permettent de cuire, par absorption d'eau, beaucoup plus rapidement qu'un grain de riz classique. En effet, le grain de riz préparé de l'invention est conçu pour cuire en quelques minutes seulement dans de l'eau non nécessairement portée à ébullition, de préférence en moins de 5 minutes et avantageusement en sensiblement 4 minutes.

De manière préférée, le grain de céréale de l'invention comprend un grain de riz blanc précuit destiné à être cuit par absorption d'eau. En pratique, le grain de riz blanc précuit de l'invention est introduit dans un contenant et mélangé avec de l'eau, de manière à provoquer une hydratation rapide du grain de riz, notamment en raison de sa faible densité et de ses nombreux pores obtenus par le procédé de préparation susvisé.

En particulier, ledit grain de céréale présente une densité comprise entre sensiblement 0,2 et 0,5 g/cm$^3$. De préférence, il présente une densité comprise entre sensiblement 0,39 et 0,41 g/cm$^3$, de préférence égale à sensiblement 0,4 g/cm$^3$.

Le grain de riz présente avantageusement un rapport longueur sur largeur au moins égal à sensiblement 3, notamment lorsqu'il s'agit d'un riz long classique. Le grain de riz est donc préférentiellement un grain de riz long comprenant de nombreux pores à sa surface pour garantir une hydratation rapide, optimale et à coeur lors de sa mise en contact avec de l'eau.

Dans un mode de réalisation préféré, le grain de céréale présente une humidité inférieure à sensiblement 12 %, de préférence inférieure ou égale à sensiblement 8 % ou 9 %. L'humidité finale du grain de riz dépend de la nature de grain de céréale et de son utilisation future. En général, l'humidité du grain de riz blanc précuit de type indica est de l'ordre de 12 % lorsqu'il est nature et de l'ordre de 8 % lorsqu'il comprend un enrobage.

A ce propos et comme expliqué dans ce qui précède, il est possible que le grain de céréale comprenne préférentiellement un enrobage comprenant au moins un composé conçu pour améliorer les propriétés organoleptiques et/ou nutritionnelles dudit grain de céréale. L'enrobage dudit grain de riz comprend par exemple des substances aromatiques, comme des épices et/ou des herbes aromatiques, au moins une matière grasse, de type huile végétale par exemple de l'huile de tournesol ou de l'huile d'olive, ainsi qu'éventuellement d'autres composés nutritionnels et/ou organoleptiques. Il comprend notamment au moins un antioxydant de type extrait de romarin destiné à éviter le rancissement de la matière grasse ajoutée dans l'enrobage.

Dès lors, le grain de riz de la présente invention présente des caractéristiques particulières qui le rendent facile, rapide et pratique à cuire, par simple contact avec un liquide, notamment de l'eau, pas nécessairement chaude, pendant quelques minutes.

Nous nous attacherons dans la suite de la description à décrire deux tests d'analyses des propriétés du grain de riz préparé selon le procédé de l'invention ainsi qu'un exemple de réalisation du procédé de préparation d'un grain de riz de l'invention.

TESTS ET EXEMPLE DE REALISATION

A titre illustratif et conformément à l'invention, les principales caractéristiques requises pour le grain de riz ont été testées, notamment grâce aux méthodes de détermination de l'absorption d'eau et de détermination de la viscoélasticité du grain de riz après qu'il est subi le procédé de préparation de l'invention.

TEST D'ABSORPTION D'EAU

Le principe de cette méthode repose sur la cuisson d'une quantité précise de riz dans de l'eau distillée portée à une température de 100°C, pendant un temps déterminé, dans le but de déterminer la quantité d'eau absorbé par le riz pendant sa cuisson.

Matériel et méthodes

On utilise les instruments suivants : une casserole en inox d'un diamètre de 17 cm, une plaque à induction d'une puissance de 2 000 W, un égouttoir d'un diamètre de 15 cm, un chronomètre et des balances d'une précision de 0,01 g.

La cuisson du riz se fait de la manière suivante :

- on met dans la casserole 500 ml d'eau distillée que l'on porte à ébullition,

- on introduit 100 g de riz (à +/- 0,01 g) dans la casserole et on déclenche le chronomètre,

- on égoutte le riz pendant une minute.

Les mesures suivantes sont réalisées :

- poids du riz égoutté,

- pourcentage d'absorption (PA) selon la formule suivante :

$$PA(\%) = \text{poids du riz égoutté} - 100$$

TEST DE VISCOELASTICITE

Le principe de cette méthode repose sur la cuisson d'une quantité précise de riz dans de l'eau distillée portée à une température de 100°C, pendant un temps déterminé, dans le but de déterminer les paramètres suivants :

- l'épaisseur des grains de riz cuits, avant et après l'application d'une force constante pendant une durée précise et après le relâchement de la force,

- la fermeté et l'élasticité du grain de riz à partir des résultats relatifs à l'épaisseur de ce dernier.

Matériel et méthodes

On utilise les instruments suivants : un texturomètre TA.XT-plus, une casserole en inox d'un diamètre de 17 cm, une plaque à induction d'une puissance de 2000 W, un égouttoir d'un diamètre de 15 cm, deux boîtes de Pétri d'un diamètre de 6 et 8 cm respectivement, un contenant plat recouvert d'une éponge humide, un chronomètre et des balances d'une précision de 0,01 g.
La cuisson du riz se fait de la manière suivante :

- on met dans une casserole 500 ml d'eau distillée que l'on porte à ébullition,

- on introduit 100 g de riz (à +/- 0,01 g) dans la casserole et on déclenche le chronomètre,

- on met le riz dans l'égouttoir après le temps de cuisson défini,

- on égoutte le riz pendant une minute,

- on met environ 50 grains de riz dans la boîte de Pétri d'un diamètre de 6 cm et on dépose la boîte sur l'éponge humide,

- on recouvre la boîte de Pétri d'un diamètre de 6 cm par la boîte de Pétri d'un diamètre de 8 cm de manière à ce que cette dernière repose également l'éponge au niveau de son ouverture, de manière à maintenir l'humidité des grains de riz,

- on laisse reposer les grains de riz à température ambiante pendant 15 mn avant les mesures au texturomètre.

Les mesures suivantes sont réalisées à l'aide d'un texturomètre TA-XT-plus et d'un programme prédéfini selon le protocole suivant :

- 3 grains de riz sont disposés dans le triangle du texturomètre,

- la mesure est reproduite 6 fois.

Les paramètres suivants sont mesurés :

- E : épaisseur initiale du grain de riz,

- $e_1$ : épaisseur du grain de riz cuit après l'application d'une masse de 700 g pendant 40 secondes,

- $e_2$ : épaisseur du grain de riz cuit 20 secondes après l'arrêt de l'application de la masse,

- Fermeté (F) : résistance à l'écrasement du grain de riz cuit soumis à la force calculée selon la formule suivante :

$$F = (e_1 / E) \times 100$$

- Elasticité (R) : aptitude des grains de riz cuits à retrouver leur épaisseur initiale lorsque la force n'est plus appliquée calculée selon la formule suivante :

$$R = (e_2 - e_1) / (E - e_1) \times 100$$

Les caractéristiques principales dudit grain de riz de l'invention, avant et après cuisson, et notamment les calculs d'absorption d'eau et de viscoélasticité visés dans les tests clavant, sont précisées dans le tableau ci-dessous. Ce tableau a pour objectif de résumer la valeur des différentes caractéristiques recherchées pour le grain de riz (colonne « *Cible* ») après sa cuisson ainsi que les limites d'acceptation de ces caractéristiques (colonne « Rejet »).

| Critères | | Cible | Rejet |
|---|---|---|---|
| APRES CUISSON (EAU BOUILLANTE 3 MN) | Absorption d'eau après 3 mn de cuisson (PA) | 125% | < 115 % or > 135 % |
| | Texture mesurée au texturomètre TAXT+ après 3 mn de cuisson | -Fermeté (F) :45<br>-Elasticité (E) : 55 | F> 52 or < 40<br>E > 60 or < 45 |
| | Analyse sensorielle | Presentation:<br>Couleur et forme des grains homogène Grains fluides non collants<br>Texture :<br>-texture homogène moyen ferme élastique<br>-non pâteuse<br>Gout neutre | Présentation : Grains hétérogènes et collants<br>Texture :<br>Hétérogène trop ferme et/ou pâteuse<br>Goût :<br>Présence de gout parasite |

La cuisson des grains de riz telle que référencée dans ce tableau est avantageusement réalisée dans de l'eau bouillante pendant 3 minutes.

EXEMPLE DE REALISATION

Dans l'exemple suivant, le procédé de l'invention est mis en œuvre sur une quantité précise de riz cargo, afin de mesurer certains des paramètres précisés dans le tableau ci-avant.

Le procédé de préparation mis en œuvre dans cet exemple est le suivant :

- 1 kg de grains de riz cargo de variété indica est trempé pendant 3 h à 55°C, l'humidité du cargo passant alors de 14 à 30 %.

- Les grains de riz sont ensuite transférés dans une enceinte et soumis à une vapeur sous pression de 1,2 bars pendant 12 mn, de manière à être étuvés,

- Les grains de riz sont ensuite séchés à 24 % d'humidité dans un séchoir avec de l'air chaud à 70°C,

- Les grains de riz sont ensuite usinés pendant 1 min dans un blanchisseur pilote à pierre abrasive,

- Les grains de riz sont ensuite réchauffés à 60°C avec de la vapeur et l'humidité des grains de riz est alors de 25 %.

- Les grains de riz sont ensuite aplatis par passage entre 2 rouleaux, l'écart entre les rouleaux étant de 0,4 mm. L'épaisseur moyenne des grains de riz après aplatissement est ramenée à 1,37 mm,

- Les grains de riz sont ensuite directement expansés dans un courant d'air chaud à 310°C pendant 1 min puis refroidis dans un courant d'air froid. L'humidité finale des grains est de 7,5 %.

Différentes mesures sont réalisées sur les grains de riz, notamment des mesures d'absorption d'eau (prise d'eau), de fermeté et d'élasticité, selon les différentes méthodes détaillées ci-avant.
Les résultats d'analyse sont les suivants :

- densité du riz = 0,41 g/cm$^3$,

- prise d'eau en 3 min de cuisson = 120,2 %

Les résultats de texture mesurée au texturomètre TA.XT-plus sont les suivants :

- Fermeté = 46,36 - écart type = 2,0,

- Recouvrance élastique = 49,23 - écart type = 4,8

Des mesures d'analyse sensorielle, conforme à un protocole interne et identique à celui utilisé pour définir les paramètres du tableau ci-avant, sont réalisées.
Les résultats des tests d'analyse sensorielle (dégustation) des grains de riz après 3 mn de cuisson de ces derniers dans de l'eau bouillante sont les suivants :

- couleur et aspect des grains homogènes

- texture moyennement ferme, élastique et homogène,

- grains de riz bien détachés et individualisés.

Cet exemple de réalisation du procédé de l'invention permet d'obtenir des grains de riz qui présentent des propriétés intéressantes et conformes à celles identifiées ci-avant, notamment en terme de texture et d'homogénéité.
L'ensemble des tests et exemple décrits dans ce qui précède met en évidence les avantages du procédé de préparation de l'invention et les propriétés particulièrement intéressantes des grains de riz obtenus par ce procédé.
En effet, Le grain de riz de l'invention, grâce à ses propriétés particulières, notamment en termes de densité, de taux d'humidité et de porosité, présente donc la particularité de pouvoir être cuit très rapidement, par exemple en 4 mn, c'est-à-dire de manière quasi instantanée, en présence d'eau, quelle que soit la température de cette dernière.
Une telle capacité de cuisson rapide réduit la consommation énergétique nécessaire pour cuire le grain de riz de l'invention, par rapport à un grain de riz classique. En outre, ce grain de riz permet de limiter les risques associés à l'utilisation d'eau bouillante. Il est particulièrement pratique et simple à utiliser, et réduit significativement le temps de préparation d'un repas du consommateur.

POSSIBILITE D'APPLICATION INDUSTRIELLE

L'invention trouve son application industrielle dans la préparation industrielle de produits alimentaires, en particulier de grains de céréale.

**Revendications**

1. Procédé de préparation d'un grain de céréale destiné à la consommation humaine et/ou animale comprenant successivement :

   - une étape de trempage au cours de laquelle l'humidité du grain de céréale est augmentée jusqu'à au moins 20 %,
   - une étape d'étuvage au cours de laquelle le grain de céréale est soumis à un traitement à la vapeur, afin de gélatiniser, au moins en partie, l'amidon contenu dans ledit grain de céréale,
   - une étape de séchage du grain de céréale au cours de laquelle l'humidité dudit grain de céréale est réduite à moins de 30 %,
   - une étape d'aplatissement du grain de céréale au cours de laquelle les dimensions dudit grain de céréale sont modifiées,

- une étape d'expansion du grain de céréale au cours de laquelle le volume dudit grain de céréale est augmenté,

**caractérisé en ce qu'**il comprend, préalablement à l'étape d'aplatissement et postérieurement à l'étape de séchage, une étape de réchauffage du grain de céréale par apport de chaleur humide au cours de laquelle la température dudit grain de céréale est augmentée, de manière à modifier des propriétés plastiques dudit grain de céréale afin de faciliter un aplatissement de ce dernier au cours de l'étape d'aplatissement.

**2.** Procédé de préparation selon la revendication 1 **caractérisé en ce que** l'étape de réchauffage comprend une opération de rééquilibrage du taux d'humidité du grain de céréale compris entre 20 % et 30 %, de préférence égal à sensiblement 25 %.

**3.** Procédé de préparation selon la revendication 1 ou 2 **caractérisé en ce que** l'étape de réchauffage dudit grain de céréale comprend une opération d'apport de vapeur audit grain de céréale, de telle sorte que la température dudit grain de céréale atteigne au moins 40°C, de préférence sensiblement 50°C.

**4.** Procédé de préparation selon la revendication 1 ou 2 ou 3 **caractérisé en ce que** l'étape de trempage comprend une opération d'immersion dudit grain de céréale dans une eau présentant une température supérieure à sensiblement 20°C, de préférence comprise entre sensiblement 55 et 70°C.

**5.** Procédé de préparation selon l'une des revendications 1 à 4 **caractérisé en ce que** l'étape d'étuvage se fait à une température supérieure à sensiblement 110°C, de préférence égale à sensiblement 120°C, pendant une durée supérieure à sensiblement 5 mn, de préférence comprise entre sensiblement 7 et 50 mn, de manière particulièrement préférée comprise entre sensiblement 10 et 30 mn, de manière à permettre la gélatinisation d'au moins 80 % de l'amidon compris dans ledit grain de céréale et **en ce que** l'étape d'étuvage comprend une opération d'apport de pression sur ledit grain de céréale et conduit à la gélatinisation d'au moins 90 % de l'amidon contenu dans ledit grain de céréale.

**6.** Procédé de préparation selon l'une des revendications 1 à 5 **caractérisé en ce que** l'étape de séchage comprend une opération de passage dudit grain de céréale dans un flux d'air chaud, de manière à ce que l'humidité dudit grain de céréale diminue et soit inférieure à sensiblement 30 %, de préférence égale à sensiblement 24 % et **en ce qu'**il comprend, postérieurement à l'étape de séchage, une étape d'usinage, au cours de laquelle au moins une enveloppe externe du grain de céréale est enlevée, alors que ledit grain de céréale présente une humidité égale à sensiblement 24 %.

**7.** Procédé de préparation selon l'une des revendications 1 à 6 **caractérisé en ce que** l'étape d'aplatissement comprend une opération de passage dudit grain de céréale entre au moins deux rouleaux afin qu'il présente une épaisseur comprise entre sensiblement 0,1 et 1 mm, de préférence entre sensiblement 0,4 et 0,8 mm, de manière particulièrement avantageuse égale à sensiblement 0,6 mm.

**8.** Procédé de préparation selon l'une des revendications 1 à 7 **caractérisé en ce qu'**il comprend, postérieurement à l'étape d'aplatissement et préalablement à l'étape d'expansion, une deuxième étape de séchage à l'air chaud, au cours de laquelle l'humidité du grain de céréale est réduite à une valeur inférieure à sensiblement 25 %, de préférence à une valeur égale à sensiblement 18 % et **en ce que** l'étape d'expansion comprend une opération de passage dudit grain de céréale dans un flux d'air chaud présentant une température comprise entre sensiblement 200 et 350°C, de préférence entre sensiblement 250 et 320°C, pendant un temps compris entre sensiblement 10 s et 2 mn, de manière préférée égal à sensiblement 1 mn, afin que le volume dudit grain de céréale augmente d'un facteur au moins égal à 3 et **en ce qu'**il comprend, postérieurement à l'étape d'expansion, une étape de séchage final au cours de laquelle le grain de céréale est séché à l'air et son humidité est réduite à moins de 15 %, de préférence à sensiblement 12 %, de manière préférée à sensiblement 8 %.

**9.** Procédé de préparation selon l'une des revendications 1 à 8 **caractérisé en ce qu'**il est conçu pour la pré-cuisson d'un grain de riz.

**10.** Installation pour la préparation d'un grain de céréale selon le procédé de préparation conforme à l'une des revendications 1 à 9, ledit grain de céréale étant destiné à la consommation humaine et/ou animale, ladite installation comprenant successivement :

- une unité de trempage conçue pour augmenter l'humidité du grain de céréale jusqu'à au moins 20 %,

- une unité d'étuvage conçue pour gélatiniser, au moins en partie, l'amidon contenu dans ledit grain de céréale, ladite unité d'étuvage comprenant un module de traitement à la vapeur,
- une unité de séchage conçue pour réduire l'humidité dudit grain de céréale à moins de 30 %,
- une unité d'aplatissement conçue pour modifier les dimensions dudit grain de céréale,
- une unité d'expansion conçue pour augmenter le volume dudit grain de céréale, **caractérisée en ce qu'**elle comprend une unité de réchauffage du grain de céréale disposée avant l'unité d'aplatissement et conçue pour augmenter la température dudit grain de céréale par apport de chaleur humide, de manière à modifier des propriétés plastiques dudit grain de céréale afin de faciliter un aplatissement de ce dernier dans l'unité d'aplatissement.

11. Installation selon la revendication 10 **caractérisée en ce que** l'unité de réchauffage est disposée après une unité d'usinage qui suit l'unité de séchage.

12. Installation de préparation selon la revendication 10 ou 11 **caractérisée en ce que** l'unité d'étuvage comprend un cuiseur sous pression et **en ce que** l'unité de séchage comprend un séchoir conçu pour sécher les pâtes alimentaires et **en ce que** l'unité d'aplatissement comprend au moins deux rouleaux destinés à aplatir ledit grain de céréale lors d'un déplacement relatif desdits rouleaux.

13. Installation de préparation selon l'une des revendications 10 à 12 **caractérisée en ce que** qu'elle est conçue pour la pré-cuisson d'un grain de riz.

14. Grain de céréale expansé précuit, destiné à être cuit, et destiné à la consommation humaine et/ou animale, ledit grain étant susceptible d'être obtenu par un procédé de préparation selon l'une des revendications 1 à 13, ledit grain de céréale étant **caractérisé en ce qu'**il présente une densité comprise entre sensiblement 0,2 et 0,5 g/cm$^3$, de préférence entre sensiblement 0,39 et 0,41 g/cm$^3$, de préférence égale à sensiblement 0,4 g/cm$^3$.

15. Grain de céréale selon la revendication 14 **caractérisé en ce qu'**il présente une humidité inférieure à sensiblement 12 %, de préférence inférieure ou égale à sensiblement 8 %, présente un rapport longueur sur largeur au moins égal à sensiblement 3, et est constitué par un grain de riz blanc précuit destiné à être cuit par absorption d'eau.

**Patentansprüche**

1. Verfahren zur Herstellung eines Getreidekorns, das zum menschlichen und/oder tierischen Verzehr bestimmt ist, umfassend aufeinanderfolgend:

- einen Schritt des Einweichens, bei dem die Feuchtigkeit des Getreidekorns auf mindestens 20 % erhöht wird,
- einen Schritt des Dämpfens, bei dem das Getreidekorn einer Dampfbehandlung unterzogen wird, um die Stärke, die in dem genannten Getreidekorn enthalten ist, mindestens teilweise zu gelatinisieren,
- einen Schritt des Trocknens des Getreidekorns, bei dem die Feuchtigkeit des genannten Getreidekorns auf weniger als 30 % reduziert wird,
- einen Schritt des Zusammendrückens des Getreidekorns, bei dem die Abmessungen des genannten Getreidekorns modifiziert werden,
- einen Schritt des Expandierens des Getreidekorns, bei dem das Volumen des genannten Getreidekorns erhöht wird,

**dadurch gekennzeichnet, dass** es vor dem Schritt des Zusammendrückens und nach dem Schritt des Trocknens einen Schritt des erneuten Erhitzens des Getreidekorns durch das Einbringen von feuchter Hitze umfasst, bei dem die Temperatur des genannten Getreidekorns erhöht wird, um die plastischen Eigenschaften des genannten Getreidekorns zu modifizieren, um ein Zusammendrücken dieses Letzteren während des Schritts des Zusammendrückens zu erleichtern.

2. Herstellungsverfahren nach Anspruch 1, **dadurch gekennzeichnet, dass** der Schritt des erneuten Erhitzens einen Vorgang des Reäquilibrierens des Feuchtigkeitsgehalts des Getreidekorns zwischen 20 % und 30 %, vorzugsweise im Wesentlichen gleich 25 %, umfasst.

3. Herstellungsverfahren nach Anspruch 1 oder 2, **dadurch gekennzeichnet, dass** der Schritt des erneuten Erhitzens des genannten Getreidekorns einen Vorgang des Einbringens von Dampf in das genannte Getreidekorn derart umfasst, dass die Temperatur des genannten Getreidekorns mindestens 40 °C, vorzugsweise im Wesentlichen 50 °C, erreicht.

4. Herstellungsverfahren nach Anspruch 1 oder 2 oder 3, **dadurch gekennzeichnet, dass** der Schritt des Einweichens einen Vorgang des Eintauchens des genannten Getreidekorns in Wasser mit einer Temperatur im Wesentlichen größer als 20 °C, vorzugsweise im Wesentlichen zwischen 55 und 70 °C, umfasst.

5. Herstellungsverfahren nach einem der Ansprüche 1 bis 4, **dadurch gekennzeichnet, dass** der Schritt des Dämpfens bei einer Temperatur im Wesentlichen größer als 110 °C, vorzugsweise im Wesentlichen gleich 120 °C, während einer Dauer von im Wesentlichen mehr als 5 min, vorzugsweise im Wesentlichen zwischen 7 und 50 min, besonders bevorzugt im Wesentlichen zwischen 10 und 30 min, erfolgt, um die Gelatinisierung von mindestens 80 % der Stärke, die in dem genannten Getreidekorn enthalten ist, zu gestatten, und dadurch, dass der Schritt des Dämpfens einen Vorgang des Aufbringens von Druck auf das genannte Getreidekorn umfasst und zur Gelatinisierung von mindestens 90 % der Stärke, die in dem genannten Getreidekorn enthalten ist, führt.

6. Herstellungsverfahren nach einem der Ansprüche 1 bis 5, **dadurch gekennzeichnet, dass** der Schritt des Trocknens einen Vorgang des Führens des genannten Getreidekorns in einen Heißluftstrom umfasst, damit die Feuchtigkeit des genannten Getreidekorns verringert wird und im Wesentlichen kleiner ist als 30 %, vorzugsweise im Wesentlichen gleich 24 %, und dadurch, dass es nach dem Schritt des Trocknens einen Schritt des Bearbeitens umfasst, bei dem mindestens eine äußere Hülle des Getreidekorns entfernt wird, während das genannte Getreidekorn eine Feuchtigkeit im Wesentlichen gleich 24 % aufweist.

7. Herstellungsverfahren nach einem der Ansprüche 1 bis 6, **dadurch gekennzeichnet, dass** der Schritt des Zusammendrückens einen Vorgang des Führens des genannten Getreidekorns zwischen mindestens zwei Walzen umfasst, damit es eine Dicke im Wesentlichen zwischen 0,1 und 1 mm, vorzugsweise im Wesentlichen zwischen 0,4 und 0,8 mm, besonders vorteilhaft im Wesentlichen gleich 0,6 mm, aufweist.

8. Herstellungsverfahren nach einem der Ansprüche 1 bis 7, **dadurch gekennzeichnet, dass** nach dem Schritt des Zusammendrückens und vor dem Schritt des Expandierens einen zweiten Schritt des Trocknens mit Heißluft umfasst, bei dem die Feuchtigkeit des Getreidekorns auf einen Wert im Wesentlichen kleiner 25 %, vorzugsweise auf einen Wert im Wesentlichen gleich 18 %, reduziert wird, und dadurch, dass der Schritt des Expandierens einen Vorgang des Führens des genannten Getreidekorns in einen Heißluftstrom mit einer Temperatur im Wesentlichen zwischen 200 und 350 °C, vorzugsweise im Wesentlichen zwischen 250 und 320 °C, während einer Zeit im Wesentlichen zwischen 10 s und 2 min, bevorzugt im Wesentlichen gleich 1 min, umfasst, damit das Volumen des genannten Getreidekorns um einen Faktor mindestens gleich 3 zunimmt, und dadurch, dass es nach dem Schritt des Expandierens einen Endschritt des Trocknens umfasst, bei dem das Getreidekorn luftgetrocknet wird und seine Feuchtigkeit auf weniger als 15 %, vorzugsweise im Wesentlichen auf 12 %, bevorzugt im Wesentlichen auf 8 %, reduziert wird.

9. Herstellungsverfahren nach einem der Ansprüche 1 bis 8, **dadurch gekennzeichnet, dass** es zum Vorkochen eines Reiskorns ausgelegt wird.

10. Anlage zur Herstellung eines Getreidekorns gemäß dem Herstellungsverfahren nach einem der Ansprüche 1 bis 9, wobei das genannte Getreidekorn zum menschlichen und/oder tierischen Verzehr bestimmt ist, wobei die genannte Anlage aufeinanderfolgend umfasst:

 - eine Einheit zum Einweichen, die dazu ausgelegt ist, um die Feuchtigkeit des Getreidekorns auf mindestens 20 % zu erhöhen,
 - eine Einheit zum Dämpfen, die dazu ausgelegt ist, um die Stärke, die in dem genannten Getreidekorn enthalten ist, mindestens teilweise zu gelatinisieren, wobei die genannte Einheit zum Dämpfen ein Modul zur Dampfbehandlung umfasst,
 - eine Einheit zum Trocknen, die dazu ausgelegt ist, um die Feuchtigkeit des genannten Getreidekorns auf weniger als 30 % zu reduzieren,
 - eine Einheit zum Zusammendrücken, die dazu ausgelegt ist, um die Abmessungen des genannten Getreidekorns zu modifizieren,
 - eine Einheit zum Expandieren, die dazu ausgelegt ist, um das Volumen des genannten Getreidekorns zu erhöhen,

 **dadurch gekennzeichnet, dass** sie eine Einheit zum erneuten Erhitzen des Getreidekorns umfasst, die vor der Einheit zum Zusammendrücken angeordnet ist und dazu ausgelegt ist, um die Temperatur des genannten Getreidekorns durch das Einbringen von feuchter Hitze zu erhöhen, um die plastischen Eigenschaften des genannten Getreidekorns zu modifizieren, um ein Zusammendrücken dieses Letzteren in der Einheit zum Zusammendrücken zu erleichtern.

11. Anlage nach Anspruch 10, **dadurch gekennzeichnet, dass** die Einheit zum erneuten Erhitzen nach einer Einheit zum Bearbeiten angeordnet ist, die der Einheit zum Trocknen folgt.

12. Herstellungsanlage nach Anspruch 10 oder 11, **dadurch gekennzeichnet, dass** die Einheit zum Dämpfen einen Druckkochtopf umfasst, und dadurch, dass die Einheit zum Trocknen einen Trockner umfasst, der dazu ausgelegt ist, um die Nahrungsmittelpasten zu trocknen, und dadurch, dass die Einheit zum Zusammendrücken mindestens zwei Walzen umfasst, die dazu bestimmt sind, das genannte Getreidekorn während einer relativen Verschiebung zwischen den genannten Walzen zusammenzudrücken.

13. Herstellungsanlage nach einem der Ansprüche 10 bis 12, **dadurch gekennzeichnet, dass** sie zum Vorkochen eines Reiskorns ausgelegt ist.

14. Vorgekochtes, expandiertes Getreidekorn, welches dazu bestimmt ist, gekocht zu werden, und für den menschlichen und/oder tierischen Verzehr bestimmt ist, wobei das genannte Korn durch ein Herstellungsverfahren nach einem der Ansprüche 1 bis 13 erhalten werden kann, wobei das genannte Getreidekorn **dadurch gekennzeichnet ist, dass** es eine Dichte im Wesentlichen zwischen 0,2 und 0,5 g/cm$^3$, vorzugsweise im Wesentlichen zwischen 0,39 und 0,41 g/cm$^3$, vorzugsweise im Wesentlichen gleich 0,4 g/cm$^3$, aufweist.

15. Getreidekorn nach Anspruch 14, **dadurch gekennzeichnet, dass** es eine Feuchtigkeit im Wesentlichen kleiner 12 %, vorzugsweise im Wesentlichen kleiner oder gleich 8 %, aufweist, ein Verhältnis von Länge zu Breite von im Wesentlichen gleich 3 aufweist, und aus einem vorgekochten weißen Reiskorn besteht, das dazu bestimmt ist, durch Wasserabsorption gekocht zu werden.


**Claims**

1. Method of preparation of a cereal grain intended for human and/or animal consumption, comprising successively:

   - a soaking step during which the moisture of the cereal grain is increased up to at least 20%,
   - a stoving step during which the cereal grain is subjected to steam treatment in order to at least partly gelatinise the starch contained in said cereal grain,
   - a step of drying the cereal grain during which the moisture in said cereal grain is reduced to less than 30%,
   - a step of flattening the cereal grain during which the dimensions of said cereal grain are modified,
   - a step of expanding the cereal grain during which the volume of said cereal grain is increased,

   **characterised in that** it comprises, prior to the flattening step and subsequently to the drying step, a step of heating the cereal grain by adding moist heat during which the temperature of said cereal grain is increased, so as to modify plastic properties of said cereal grain in order to facilitate flattening thereof during the flattening step.

2. Method of preparation according to claim 1, **characterised in that** the heating step comprises an operation of rebalancing the moisture level of the cereal grain between 20% and 30%, preferably equal to approximately 25%.

3. Method of preparation according to claim 1 or 2, **characterised in that** the step of heating the cereal grain comprises an operation of steaming said cereal grain, so that the temperature of said cereal grain reaches at least 40°C, preferably approximately 50°C.

4. Method of preparation according to claim 1 or 2 or 3, **characterised in that** the soaking step comprises an operation of immersing said cereal grain in water having a temperature above approximately 20°C, preferably between approximately 55 and 70°C.

5. Method of preparation according to one of claims 1 to 4, **characterised in that** the stoving step takes place at a temperature above approximately 110°C, preferably equal to approximately 120°C, for a period greater than approximately 5 minutes, preferably between approximately 7 and 50 minutes, particularly preferably between approximately 10 and 30 minutes, so as to allow gelatinisation of at least 80% of the starch included in said cereal grain, and **in that** the stoving step comprises an operation of applying pressure to said cereal grain and leads to the gelatinisation of at least 90% of the starch contained in said cereal grain.

6. Method of preparation according to one of claims 1 to 5, **characterised in that** the drying step comprises an operation of passing said cereal grain through a hot air flow, so that the moisture in said cereal grain decreases and is less than approximately 30%, preferably equal to approximately 24%, and **in that** it comprises, subsequently to the drying step, a machining step, during which at least an external envelope of the cereal grain is removed, while said cereal grain has moisture equal to approximately 24%.

7. Method of preparation according to one of claims 1 to 6, **characterised in that** the flattening step comprises an operation of passing said cereal grain between at least two rollers so that it has a thickness of between approximately 0.1 and 1 mm, preferably between approximately 0.4 and 0.8 mm, particularly advantageously equal to approximately 0.6 mm.

8. Method of preparation according to one of claims 1 to 7, **characterised in that** it comprises, subsequently to the flattening step and prior to the expansion step, a second step of drying in hot air, during which the moisture of the cereal grain is reduced to a value below approximately 25%, preferably to a value equal to approximately 18%, and **in that** the expansion step comprises an operation of passing said cereal grain through a hot air flow having a temperature of between approximately 200 and 350°C, preferably between approximately 250 and 320°C, for a time lying between approximately 10 seconds and 2 minutes, preferably equal to approximately 1 minute, so that the volume of said cereal grain increases by a factor of at least 3, and **in that** it comprises, subsequently to the expansion step, a final drying step during which the cereal grain is dried in air and the moisture thereof is reduced to less than 15%, preferably to approximately 12%, preferably approximately 8%.

9. Method of preparation according to one of claims 1 to 8, **characterised in that** it is designed for pre-cooking of a rice grain.

10. Installation for preparation of a cereal grain according to the method of preparation in accordance with one of claims 1 to 9, said cereal grain being intended for human and/or animal consumption, said installation comprising successively:

   - a soaking unit designed to increase the moisture of the cereal grain to at least 20%,
   - a stoving unit designed to at least partly gelatinise the starch contained in said cereal grain, said stoving unit comprising a steam treatment module,
   - a drying unit designed to reduce the moisture of said cereal grain to less than 30%,
   - a flattening unit designed to modify the dimensions of said cereal grain,
   - an expansion unit designed to increase the volume of said cereal grain,

   **characterised in that** it comprises a unit for heating the cereal grain disposed before the flattening unit and designed to increase the temperature of said cereal grain by adding moist heat, so as to modify plastic properties of said cereal grain in order to facilitate flattening thereof in the flattening unit.

11. Installation according to claim 10, **characterised in that** the heating unit is disposed after a machining unit that follows the drying unit.

12. Installation for preparation according to claim 10 or 11, **characterised in that** the stoving unit comprises a pressure cooker and **in that** the drying unit comprises a dryer designed to dry pasta, and **in that** the flattening unit comprises at least two rollers intended to flatten said cereal grain during a relative movement of said rollers.

13. Installation for preparation according to one of claims 10 to 12, **characterised in that** it is designed for pre-cooking a rice grain.

14. Pre-cooked expanded cereal grain, intended to be cooked, and intended for human and/or animal consumption, said grain being able to be obtained by a method of preparation according to one of claims 1 to 13, said cereal grain being **characterised in that** it has a density of between approximately 0.2 and 0.5 g/cm$^3$, preferably between approximately 0.39 and 0.41 g/cm$^3$, preferably equal to approximately 0.4 g/cm$^3$.

15. Cereal grain according to claim 14, **characterised in that** it has moisture less than approximately 12%, preferably less than or equal to approximately 8%, has a length to width ratio at least equal to approximately 3, and consists of a pre-cooked white rice grain intended to be cooked by absorption of water.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6562396 B
- WO 0044243 A
- GB 830044 A